# EUROPEAN PATENT APPLICATION

(11) **EP 4 734 312 A1**
(43) Date of publication of application: **29.04.2026**
(21) Application number: 24208081.0
(22) Date of filing: 22.10.2024
(51) Int. Cl.: H02J 1/12, H02J 7/00, H02J 7/34

(54) **A COMPUTER SYSTEM AND A METHOD FOR CONTROLLING A FUEL CELL SYSTEM**

(71) Applicant: Volvo Truck Corporation, 405 08 Göteborg (SE)
(72) Inventor: ARYA, Pranav, 412 85 GÖTEBORG (SE); CACIC, Toni, 422 41 HISINGS BACKA (SE)
(74) Representative: Kransell & Wennborg KB

(57) **Abstract**

A computer system (1) and a method for controlling a fuel cell system (5) comprising a power conversion and distribution circuitry (3) configured to convert and deliver electric power generated by the fuel cell system to an electric energy storage system (30) and to a power consumer (40). The method comprises:
- monitoring an operating voltage of the fuel cell system and/or of the electric energy storage system,
- monitoring a temperature of the power conversion and distribution circuitry,
- detecting that the monitored operating voltage is below a nominal operating voltage of the fuel cell system, and that the monitored temperature is within a defined temperature range above a nominal temperature of the power conversion and distribution circuitry, and in response thereto temporarily controlling the fuel cell system in a first operating mode, enabling power delivery in accordance with a power request from the power consumer.

## Description

### TECHNICAL FIELD

The disclosure relates generally to fuel cell systems. In particular aspects, the disclosure relates to a computer system and a computer-implemented method for controlling a fuel cell system, and a power system comprising the fuel cell system. The disclosure can be applied to heavy-duty vehicles, such as trucks, buses, and construction equipment, among other vehicle types. The disclosure may also be applied to stationary fuel cell systems, such as in stationary power plants. Although the disclosure may be described with respect to a particular vehicle, the disclosure is not restricted to any particular vehicle.

### BACKGROUND

A fuel cell system is typically designed to deliver output power at a specific voltage range, referred to as a nominal voltage range of the fuel cell system. When operated in the nominal voltage range, the fuel cell system is able to deliver maximum power in accordance with a power capability of the fuel cell system. When the fuel cell system is operated at voltages below the nominal voltage range, it is usually derated to provide lower output power and to thereby prevent components from overheating due to high output currents. This may typically be realized by limiting the output current.

A battery may be used together with a fuel cell system, to store electric energy generated by the fuel cell system and use during peak loads when the power generated by the fuel cell system is insufficient. The battery generally has a wider nominal voltage range than the fuel cell system, including a low voltage range in which the fuel cell system is usually derated. To enable optimal use of the battery, it is desirable to be able to operate it also in the low-voltage range.

### SUMMARY

According to a first aspect of the disclosure, a computer system comprising processing circuitry configured to control a fuel cell system operable to provide output power to a power consumer is provided. The fuel cell system comprises a power conversion and distribution circuitry configured to convert and deliver electric power generated by the fuel cell system to an electric energy storage system and to the power consumer. The processing circuitry is configured to:
monitor an operating voltage of the fuel cell system and/or of the electric energy storage system,
monitor a temperature of the power conversion and distribution circuitry,
detect that the monitored operating voltage is below a nominal operating voltage of the fuel cell system, and that the monitored temperature is within a defined temperature range above a nominal temperature of the power conversion and distribution circuitry, and in response thereto temporarily control the fuel cell system in a first operating mode, enabling power delivery in accordance with a power request from the power consumer.

The first aspect of the disclosure may seek to provide an in at least some aspect improved computer system for controlling a fuel cell system, such as in a power system of a vehicle. In particular, it may seek to provide a computer system that enables the fuel cell system to be operated in a low-voltage range as long as this is not detrimental for components such as electric circuitry, connectors, one or more busbars, etc. A technical benefit may include an improved ability to provide operating power in accordance with a power request, such as from an electric propulsion system of a vehicle powered by the power system, also when a state-of-charge (SoC) of the electric energy storage system is low and the output voltage is below the nominal operating voltage of the fuel cell system. The fuel cell system is thus enabled to temporarily increase the output current as long as the defined temperature range is not exceeded. By monitoring the temperature, it may be ensured that the components are not subjected to detrimental temperatures as a result of the increased output current in the first operating mode. The first operating mode may be referred to as a power boost mode.

In the present disclosure, the fuel cell system may comprise at least one fuel cell stack, in turn comprising a plurality of fuel cells. The power conversion and distribution circuitry may comprise at least one power converter, such as a DC/DC converter, and power distribution components such as electric connectors, wires, cables, at least one busbar, etc. The fuel cell system may comprise further subsystems and components, such as a cooling system, a fuel supply system, a compressor, a humidifier, etc. A power system including the electric energy storage system and the fuel cell system may sometimes be referred to as a hybrid fuel cell system.

Optionally in some examples, including in at least one preferred example, the processing circuitry is further configured to detect that the operating voltage is below the nominal operating voltage of the fuel cell system, and that the monitored temperature exceeds the defined temperature range, and in response thereto control the fuel cell system in a second operating mode, electrically derating the fuel cell system. A technical benefit may include preventing damage to the power conversion and distribution circuitry by reducing electrical load under adverse temperature conditions, thereby improving service life of the components.

Optionally in some examples, including in at least one preferred example, the processing circuitry is further configured to predict a duration of the temporary control of the fuel cell system in the first operating mode, i.e., how long the fuel cell system is expected to be able to be operated in the first operating mode without exceeding the defined temperature range. A technical benefit may include allowing for proactive management of the fuel cell system operation to optimize power delivery in connection with demanding events in which a relatively high power request is expected.

Optionally in some examples, including in at least one preferred example, the processing circuitry is configured to predict the duration based on at least a cooling capability of the power conversion and distribution circuitry, and the monitored operating voltage. A technical benefit may include a sufficiently accurate prediction of the duration of the temporary control.

Optionally in some examples, including in at least one preferred example, the processing circuitry is further configured to predict a state-of-health of at least one electrical connector of the power conversion and distribution circuitry based on the monitored temperature, such as of at least one busbar. A technical benefit may include enabling early detection of potential connector degradation, which can improve maintenance planning and extend service life.

Optionally in some examples, including in at least one preferred example, the processing circuitry is configured to predict the state-of-health based on a total operating time of the power conversion and distribution circuitry within the defined temperature range. A technical benefit may include providing a more accurate prediction of the state-of-health, allowing for more precise maintenance scheduling and reducing the risk of unexpected failures.

According to a second aspect of the disclosure, a power system comprising a fuel cell system, an electric energy storage system, and the computer system of the first aspect is provided. The fuel cell system comprises a power conversion and distribution circuitry configured to convert and deliver electric power generated by the fuel cell system to the electric energy storage system and to a power consumer.

The second aspect of the disclosure may seek to provide an in at least some aspect improved power system. A technical benefit may include a power system having an improved ability to provide operating power in accordance with the power request, also when the SoC of the electric energy storage system is low and the output voltage is below the nominal operating voltage of the fuel cell system.

The power system may be a power system of a vehicle, wherein the power consumer may be an electric propulsion system of the vehicle, or the power system of a power plant or of another stationary application. The electric energy storage system may be configured to store electric energy produced by the fuel cell system, such as for use by the power consumer during peak loads as a complement to the electric power supplied from the fuel cell system.

Optionally in some examples, including in at least one preferred example, the power system further comprises a cooling system configured to cool at least the power conversion and distribution circuitry. A technical benefit may include improved thermal management of the power system, which can increase the duration of the time periods in which the fuel cell system can be operated in the first operating mode, hence improving the conditions for providing an extended power boost.

Optionally in some examples, including in at least one preferred example, the power system further comprises a temperature sensor arranged to measure the temperature of at least one electrical connector within the power conversion and distribution circuitry, such as of a busbar. A technical benefit may include more accurate temperature monitoring of critical components within the power conversion and distribution circuitry, resulting in a better prediction of, e.g., the state-of-health of those components.

According to a third aspect of the disclosure, a vehicle comprising the power system of the second aspect is provided. The vehicle may be a heavy-duty vehicle such as a bus or a truck.

According to a fourth aspect of the disclosure, a computer implemented method for controlling a fuel cell system operable to provide output power to a power consumer is provided. The fuel cell system comprises a power conversion and distribution circuitry configured to convert and deliver electric power generated by the fuel cell system to an electric energy storage system and to the power consumer. The method comprises:
monitoring, by processing circuitry of a computer system, an operating voltage of the fuel cell system and/or of the electric energy storage system,
monitoring, by the processing circuitry, a temperature of the power conversion and distribution circuitry,
in response to detecting, by the processing circuitry, that the monitored operating voltage is below a nominal operating voltage of the fuel cell system, and that the monitored temperature is within a defined temperature range above a nominal temperature of the power conversion and distribution circuitry, temporarily controlling, by the processing circuitry, the fuel cell system in a first operating mode, enabling power delivery in accordance with a power request from the power consumer.

The method of the fourth aspect is associated with the above discussed technical benefits of the computer system according to the first aspect.

Optionally in some examples, including in at least one preferred example, the method further comprises, in response to detecting by the processing circuitry that the operating voltage is below the nominal operating voltage of the fuel cell system, and that the monitored temperature exceeds the defined temperature range, controlling, by the processing circuitry, the fuel cell system in a second operating mode, electrically derating the fuel cell system.

Optionally in some examples, including in at least one preferred example, the method further comprises predicting, by the processing circuitry, a duration of the temporary control of the fuel cell system in the first operating mode.

Optionally in some examples, including in at least one preferred example, the method comprises predicting the duration based on at least a cooling capability of the power conversion and distribution circuitry, and the monitored operating voltage.

Optionally in some examples, including in at least one preferred example, the method further comprises predicting, by the processing circuitry, a state-of-health of at least one electrical connector of the power conversion and distribution circuitry based on the monitored temperature.

Optionally in some examples, including in at least one preferred example, the method comprises predicting the state-of-health based on a total operating time of the power conversion and distribution circuitry within the defined temperature range.

Optionally in some examples, including in at least one preferred example, the method comprises monitoring the temperature by receiving temperature data from a temperature sensor arranged to measure the temperature of an electrical connector of the power conversion and distribution circuitry.

Optionally in some examples, including in at least one preferred example, the method comprises defining the temperature range to extend from the nominal temperature of the power conversion and distribution circuitry to a predetermined upper threshold temperature.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings. The drawings are schematic and are not drawn to scale.
**FIG. 1** is an exemplary vehicle according to an example.
**FIG. 2** is an exemplary system diagram of a power system according to an example.
**FIG. 3** is a flow-chart illustrating a method according to an example.
**FIG. 4** is a diagram illustrating power as a function of voltage in a power system according to an example.
**FIG. 5** is a diagram illustrating temperature as a function of time in a power system according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

A fuel cell system is typically designed to deliver output power at a specific voltage range, referred to as a nominal voltage range of the fuel cell system. When operated in the nominal voltage range, the fuel cell system is able to deliver maximum power in accordance with a power capability of the fuel cell system. When the fuel cell system is operated at voltages below the nominal voltage range, it is usually derated to provide lower output power and to thereby prevent components of a power conversion and distribution circuitry of the fuel cell system from overheating due to high output currents. This may typically be realized by limiting the output current.

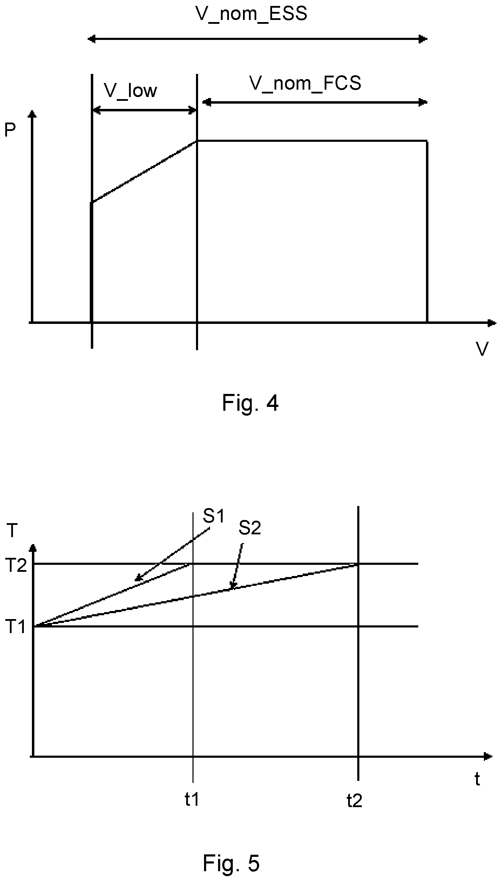

Electric energy storage systems comprising batteries used together with fuel cell systems in power systems, such as in hybrid fuel cell systems, generally have a wider nominal voltage range than the fuel cell system itself. This is schematically illustrated in **FIG. 4****,** showing output power P as a function of voltage V for a fuel cell system and a battery, wherein V_nom_FCS is the nominal voltage operating range for a fuel cell system and V_nom_ESS is the nominal voltage operating range for a battery. The output voltage of a battery decreases with its state-of-charge (SoC). Therefore, when the SoC of the battery is low, the voltage may decrease to values below the nominal voltage range of the fuel cell system. In this low voltage range V_low, the fuel cell system may typically be derated as discussed above, until the battery can be recharged and once again operated in the nominal voltage range of the fuel cell system. Recharging may be carried out by directing power generated by the fuel cell system to the battery as long as a power request from a power consumer, such as the propulsion system of the vehicle, is relatively low. However, the derating may cause problems in, e.g., hill climbs when a relatively high output power is requested by the propulsion system.

According to the present disclosure, a limited overheating of components within the power conversion and distribution circuitry of the fuel cell system is temporarily allowed during low voltage conditions, such that power delivery in accordance with a power request from the power consumer is temporarily enabled.

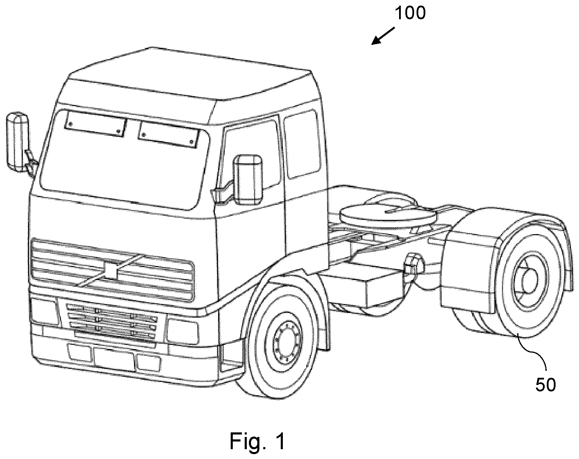

**FIG. 1** is an exemplary vehicle 100 according to an example. The vehicle is in the illustrated example a heavy-duty towing truck. It shall however be noted that the vehicle may be any other kind of vehicle, such as a bus, a construction equipment, e.g. a wheel loader, an excavator etc., or a passenger car. The vehicle may in some embodiments be in the form of a marine vessel. The vehicle may be an autonomous vehicle, i.e. a self-driving vehicle, and/or the vehicle may be arranged to be operated by a driver. The driver may be an on-board driver and/or an off-board driver which controls the vehicle from a remote location. The vehicle 100 comprises an electric propulsion system for providing propulsion force to ground engaging members 50 of the vehicle 100. The ground engaging members 50 are herein a pair of wheels. However, in other embodiments, crawler members may be used in addition or as an alternative. The vehicle further comprises a power system as will be further described below for providing electric power to the electric propulsion system.

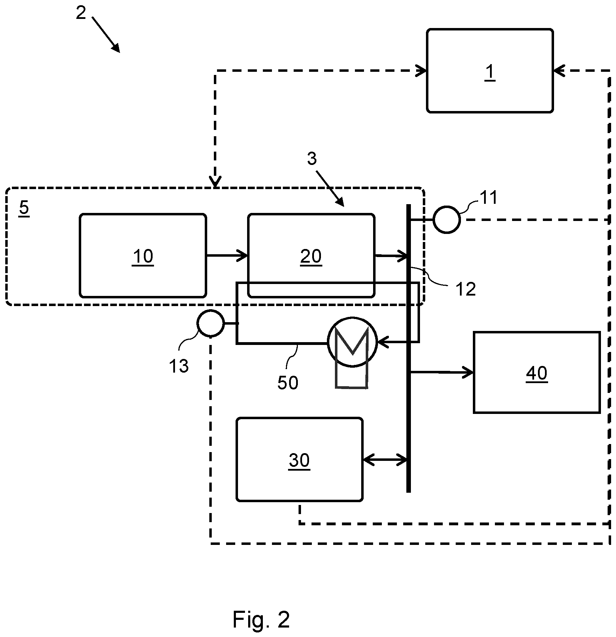

**FIG. 2** is a system diagram of a power system 2 according to an example. The power system 2 is configured to deliver output power to a power consumer 40, such as the electric propulsion system of the vehicle 100 illustrated in FIG. 1. The power system 2 comprises a fuel cell system 5 comprising a fuel cell stack 10 and a power conversion and distribution circuitry 3, and an electric energy storage system 30. The power conversion and distribution circuitry 3 is configured to convert and distribute electric power generated by the fuel cell stack 10 to the electric energy storage system 30 and to the power consumer 40, depending on, e.g., a current power request from the power consumer 40. The power conversion and distribution circuitry 3 comprises at least a power converter 20 configured to convert the electric power generated by the fuel cell stack 10, such as a DC/DC converter, and a busbar arrangement 12, comprising at least one busbar, to which both the power converter 20 and the electric energy storage system 30 are electrically connected. Of course, the busbar arrangement 12 may comprise a plurality of busbars, such as at least one positive busbar and one negative busbar. The DC/DC converter 20 converts low-voltage DC output power from the fuel cell stack 10 to high-voltage DC output power usable by the power consumer 40 for propulsion of the vehicle 100 and for charging of the electric energy storage system 30. The output voltage of the DC/DC converter 20 should therefore match that of the electric energy storage system 30. Hence, when the SoC of the electric energy storage system 30 decreases and the output voltage from the electric energy storage system 30 drops, the DC/DC converter 20 needs to operate at an output voltage below the nominal operating voltage of the fuel cell system 5. By the nominal operating voltage of the fuel cell system 5 is herein intended the nominal output voltage of the DC/DC converter 20. The nominal operating voltage may be a nominal operating voltage range, such as illustrated in FIG. 4.

The fuel cell system 5 may comprise a plurality of fuel cell stacks 10. Each fuel cell stack 10 may in turn comprise a plurality of fuel cells, configured to generate electric power by an electrochemical reaction between a fuel, such as hydrogen, and an oxidizer, such as air, in a known manner. This electric power can be used to power various power consumers 40 of the vehicle 100 directly, such as at least one electric machine, a power steering system, an electro-mechanical service brake system, and so on. Parts or all of the electric power generated by the fuel cell stack 10 can also be stored in the electric energy storage system 30, located on-board the vehicle 100. The electric energy storage system 30 may comprise one or more batteries, and it may be used to provide electric power to the power consumer 40 during peak loads, when the electric power generated by the fuel cell stack 10 is insufficient to comply with a power request from the power consumer 40.

The fuel cell system 5 may comprise a plurality of additional components and sub-systems, such as a fuel supply system, a compressor, a humidifier, a condenser, etc., which will not be further described herein. A cooling system 50, configured to cool at least the power and distribution circuitry 3, may form part of the fuel cell system 5 or may be a separate cooling system of the vehicle 100. The cooling system may form part of a cooling system of the vehicle, or it may be a separate cooling system. Although the illustrated cooling system 50 comprises a single cooling loop, the cooling system may in some examples comprise several cooling loops, such as one for cooling the power and distribution circuitry 3 and one for cooling the fuel cell stack 10. A first temperature sensor 11 may be arranged on the busbar 12, and/or a second temperature sensor 13 may be arranged within the cooling system 50. For example, as illustrated in FIG. 2, the second temperature sensor 13 may be arranged for measuring a temperature of coolant supplied to the DC/DC converter 20 via the cooling system 50.

The power system 2 further comprises an electronic control device 1, such as a computer system comprising processing circuitry, configured to control operation of the power system 2, in particular to control operation of the fuel cell system 5. The control device 1 may be configured to receive measurement data from the temperature sensors 11, 13. It may further be configured to obtain data relating to an operating voltage of the power system 2, from the electric energy storage device 30 and/or from the fuel cell system 5. When the power system 2 is located in a vehicle 100, the control device 1 may be located on-board the vehicle. Alternatively, the electronic control device 1 may comprise on-board and off-board units configured to be communicatively connected to one another, e.g., via a wireless connection.

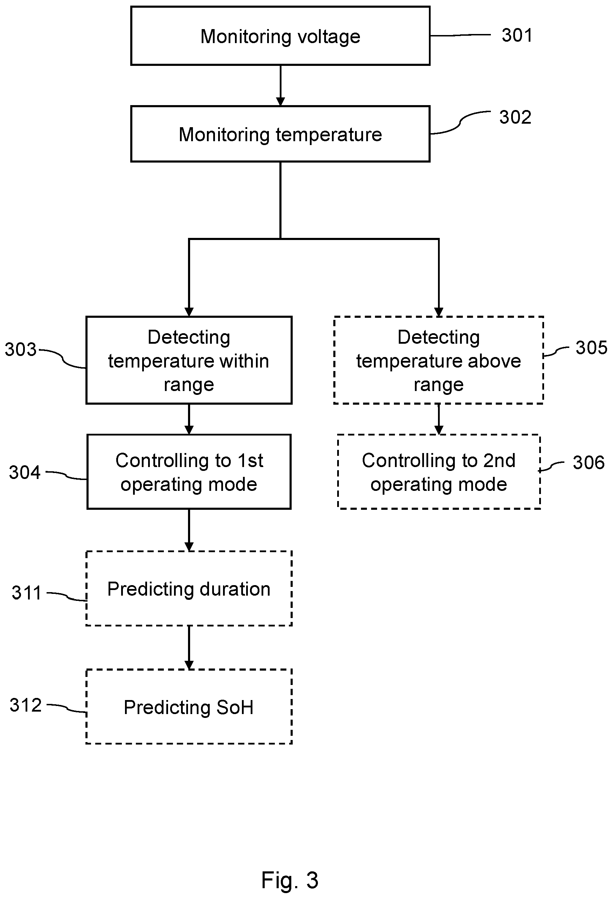

FIG. 3 illustrates a method for controlling the fuel cell system 5 of the power system 2 according to an example of the disclosure. The method comprises the actions listed below, that may be performed by the processing circuitry of the control device 1. Optional actions are marked by dashed lines in FIG. 3.

**Action 301:** Monitoring an operating voltage of the power system 2, i.e., an operating voltage of the fuel cell system 5 or of the electric energy storage system 30. The monitoring may be realized by continuously, in the processing circuitry, receiving data relating to the operating voltage from the electric energy storage system 30 and/or from the fuel cell system 5, such as from the power converter 20, and/or from a voltmeter arranged to measure the operating voltage at the busbar arrangement 12. The operating voltage corresponds to an output voltage of the power converter 20 and of the electric energy storage system 30.

**Action 302:** Monitoring a temperature of the power conversion and distribution circuitry 3. The monitoring may be realized by continuously, in the processing circuitry, receiving temperature data relating to the temperature of the busbar arrangement 12 from the first temperature sensor 11, and/or temperature data relating to the temperature of the coolant supply to the power converter 20 from the second temperature sensor 13. The first and/or second temperature sensor(s) 11, 13 may measure the temperature and send the measurement data to the control device 1.

**Action 303:** Detecting that the monitored operating voltage is below a nominal operating voltage of the fuel cell system 5, and that the monitored temperature is within a defined temperature range above a nominal temperature of the power conversion and distribution circuitry 3. With reference to FIG. 4, the monitored operating voltage V is below the nominal operating voltage range V_nom_FCS of the fuel cell system 5, hence it is within the low-voltage range V_low. With reference to **FIG. 5****,** illustrating temperature T of the power conversion and distribution circuitry 3 as a function of time t for two different scenarios S1 and S2, the defined temperature range may extend from the nominal temperature T1 of the power conversion and distribution circuitry 3 to a predetermined upper threshold temperature T2.

**Action 304:** In response to the detection in action 303, temporarily controlling the fuel cell system 5 in a first operating mode, enabling power delivery in accordance with a power request from the power consumer 40. In the first operating mode, the fuel cell system 5 is temporarily controlled to deliver output power in accordance with the power request from the power consumer by increasing the output current from the fuel cell system 5. Hence, according to the proposed method, the fuel cell system 5 is not derated when the monitored temperature is within the defined temperature range, even if the monitored operating voltage falls below the nominal operating voltage and is within the range V_low illustrated in FIG. 4.

**Action 305:** Detecting that the operating voltage is below the nominal operating voltage of the fuel cell system 5, and that the monitored temperature exceeds the defined temperature range. The monitored temperature has hence increased above the upper threshold temperature T2, indicating a risk of overheating of the power conversion and distribution circuitry 3.

**Action 306:** In response to the detection in action 305, controlling the fuel cell system 5 in a second operating mode, electrically derating the fuel cell system 5. The output current from the fuel cell system 5, i.e., the output current from the power converter 20, is hence limited to avoid further heating of the power conversion and distribution circuitry 3.

**Action 311:** Predicting a duration of the temporary control of the fuel cell system 5 in the first operating mode, i.e., predicting how long the fuel cell system 5 is expected to be able to be operated in the first operating mode before the upper threshold temperature T2 is exceeded. The prediction of the duration may be based on at least a cooling capability of the power conversion and distribution circuitry 3 and the monitored operating voltage. The lower the operating voltage, the faster the temperature increases, resulting in a shorter duration of the first operating mode. Hence, the duration increases with operating voltage, given that the cooling capability is constant. A higher cooling capability will lead to a longer duration, and a lower cooling capability will lead to a shorter duration. This is schematically illustrated in FIG. 5 for the two different scenarios S1 and S2. In scenario S1, the temperature increases relatively fast from the nominal temperature T1 to the predetermined upper threshold temperature T2. The predicted duration of the temporary control of the fuel cell system 5 in the first operating mode equals the time tl that it takes for the monitored temperature to reach the upper threshold temperature T2. In the scenario S2, with better cooling capability, the temperature increases more slowly from the nominal temperature T1 to the upper threshold temperature T2. The predicted duration in the second scenario S2 equals the time t2 that it takes for the monitored temperature to reach the upper threshold temperature T2 with this better cooling capability. The cooling capability may be determined based on the design of the cooling system 50 and the ambient conditions, such as ambient temperature and pressure. It may, e.g., be determined using a thermal model of the cooling system 50.

**Action 312:** Predicting a state-of-health (SoH) of at least one electrical connector of the power conversion and distribution circuitry 3 based on the monitored temperature, such as the SoH of a busbar of the busbar arrangement 12. The predicting of the SoH may comprise calculating an amount of service life remaining for the components when the fuel cell system 5 is allowed to operate in the first operating mode. The predicting of the SoH may be based on a total operating time of the power conversion and distribution circuitry 3 within the defined temperature range, i.e., between the nominal temperature T1 and the predetermined upper threshold temperature T2.

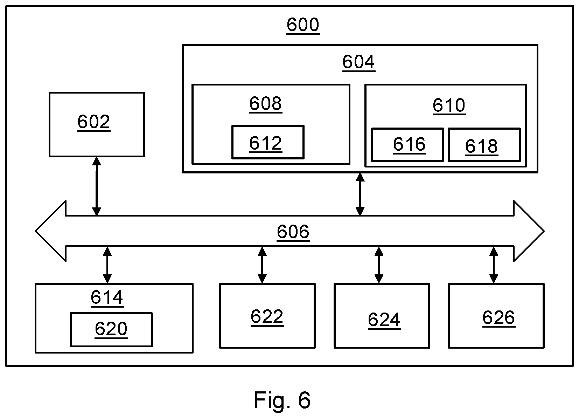

**FIG. 6** is a schematic diagram of a computer system **600** for implementing examples disclosed herein, such as in the electronic control unit 1 illustrated in FIG. 2. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or j ointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or j ointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system 600 when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of numbered examples of the disclosure is presented.

Example 1. A computer system (1, 600) comprising processing circuitry (602) configured to control a fuel cell system (5) operable to provide output power to a power consumer (40), the fuel cell system (5) comprising a power conversion and distribution circuitry (3) configured to convert and deliver electric power generated by the fuel cell system (5) to an electric energy storage system (30) and to the power consumer (40), the processing circuitry being configured to:
- monitor an operating voltage of the fuel cell system (5) and/or of the electric energy storage system (30),
- monitor a temperature of the power conversion and distribution circuitry (3),
- detect that the monitored operating voltage is below a nominal operating voltage of the fuel cell system (5), and that the monitored temperature is within a defined temperature range above a nominal temperature of the power conversion and distribution circuitry (3), and in response thereto temporarily control the fuel cell system (5) in a first operating mode, enabling power delivery in accordance with a power request from the power consumer (40).

Example 2. The computer system of example 1, wherein the processing circuitry is further configured to:
- detect that the operating voltage is below the nominal operating voltage of the fuel cell system (5), and that the monitored temperature exceeds the defined temperature range, and in response thereto control the fuel cell system (5) in a second operating mode, electrically derating the fuel cell fuel cell system (5).

Example 3. The computer system of example 1 or 2, wherein the processing circuitry is further configured to:
- predict a duration of the temporary control of the fuel cell system (5) in the first operating mode.

Example 4. The computer system of example 3, wherein the processing circuitry is configured to predict the duration based on at least a cooling capability of the power conversion and distribution circuitry (3), and the monitored operating voltage.

Example 5. The computer system of any one of the preceding examples, wherein the processing circuitry is further configured to:
- predict a state-of-health of at least one electrical connector (12) of the power conversion and distribution circuitry (3) based on the monitored temperature.

Example 6. The computer system of example 5, wherein the processing circuitry is configured to predict the state-of-health based on a total operating time of the power conversion and distribution circuitry (3) within the defined temperature range.

Example 7. A power system (2) comprising a fuel cell system (5), an electric energy storage system (30), and the computer system (1) of any one of the preceding examples, the fuel cell system (5) comprising a power conversion and distribution circuitry (3) configured to convert and deliver electric power generated by the fuel cell system (5) to the electric energy storage system (30) and to a power consumer (40).

Example 8. The power system of example 7, further comprising a cooling system (50) configured to cool at least the power conversion and distribution circuitry (3).

Example 9. The power system of example 7 or 8, further comprising a temperature sensor (11) arranged to measure the temperature of at least one electrical connector (12) within the power conversion and distribution circuitry (3), such as of a busbar.

Example 10. A vehicle (100) comprising the power system (2) of any one of examples 7-9.

Example 11. A computer-implemented method for controlling a fuel cell system (5) operable to provide output power to a power consumer (40), the fuel cell system (5) comprising a power conversion and distribution circuitry (3) configured to convert and deliver electric power generated by the fuel cell system (5) to an electric energy storage system (30) and to the power consumer (40), the method comprising:
- monitoring (301), by processing circuitry (602) of a computer system (1, 600), an operating voltage of the fuel cell system (5) and/or of the electric energy storage system (30),
- monitoring (302), by the processing circuitry (602), a temperature of the power conversion and distribution circuitry (3),
- in response to detecting (303), by the processing circuitry, that the monitored operating voltage is below a nominal operating voltage of the fuel cell system (5), and that the monitored temperature is within a defined temperature range above a nominal temperature of the power conversion and distribution circuitry (3), temporarily controlling (304), by the processing circuitry, the fuel cell system (5) in a first operating mode, enabling power delivery in accordance with a power request from the power consumer (40).

Example 12. The method of example 11, further comprising:
- in response to detecting (305), by the processing circuitry, that the operating voltage is below the nominal operating voltage of the fuel cell system (5), and that the monitored temperature exceeds the defined temperature range, controlling (306), by the processing circuitry, the fuel cell system (5) in a second operating mode, electrically derating the fuel cell system (5).

Example 13. The method of example 11 or 12, further comprising:
- predicting (311), by the processing circuitry, a duration of the temporary control of the fuel cell system (5) in the first operating mode.

Example 14. The method of example 13, wherein the predicting (311) of the duration is based on at least a cooling capability of the power conversion and distribution circuitry (3), and the monitored operating voltage.

Example 15. The method of any one of examples 11-14, further comprising:
- predicting (312), by the processing circuitry, a state-of-health of at least one electrical connector (12) of the power conversion and distribution circuitry (3) based on the monitored temperature.

Example 16. The method of example 15, wherein the predicting (312) of the state-of-health is based on a total operating time of the power conversion and distribution circuitry (3) within the defined temperature range.

Example 17. The method of any one of examples 11-16, wherein the monitoring (301) of the temperature comprises receiving temperature data from a temperature sensor (11) arranged to measure the temperature of an electrical connector (12) of the power conversion and distribution circuitry (3).

Example 18. The method of any one of examples 11-17, wherein the defined temperature range extends from the nominal temperature of the power conversion and distribution circuitry (3) to a predetermined upper threshold temperature.

Example 19. A computer program product comprising program code for performing, when executed by the processing circuitry, the method of any of examples 11-18.

Example 20. A non-transitory computer-readable storage medium comprising instructions, which when executed by the processing circuitry, cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (1, 600) comprising processing circuitry (602) configured to control a fuel cell system (5) operable to provide output power to a power consumer (40), the fuel cell system (5) comprising a power conversion and distribution circuitry (3) configured to convert and deliver electric power generated by the fuel cell system (5) to an electric energy storage system (30) and to the power consumer (40), the processing circuitry being configured to:
- monitor an operating voltage of the fuel cell system (5) and/or of the electric energy storage system (30),
- monitor a temperature of the power conversion and distribution circuitry (3),
- detect that the monitored operating voltage is below a nominal operating voltage of the fuel cell system (5), and that the monitored temperature is within a defined temperature range above a nominal temperature of the power conversion and distribution circuitry (3), and in response thereto temporarily control the fuel cell system (5) in a first operating mode, enabling power delivery in accordance with a power request from the power consumer (40).

2. The computer system of claim 1, wherein the processing circuitry is further configured to:
- detect that the operating voltage is below the nominal operating voltage of the fuel cell system (5), and that the monitored temperature exceeds the defined temperature range, and in response thereto control the fuel cell system (5) in a second operating mode, electrically derating the fuel cell fuel cell system (5).

3. The computer system of claim 1 or 2, wherein the processing circuitry is further configured to:
- predict a duration of the temporary control of the fuel cell system (5) in the first operating mode.

4. The computer system of claim 3, wherein the processing circuitry is configured to predict the duration based on at least a cooling capability of the power conversion and distribution circuitry (3), and the monitored operating voltage.

5. The computer system of any one of the preceding claims, wherein the processing circuitry is further configured to:
- predict a state-of-health of at least one electrical connector (12) of the power conversion and distribution circuitry (3) based on the monitored temperature.

6. The computer system of claim 5, wherein the processing circuitry is configured to predict the state-of-health based on a total operating time of the power conversion and distribution circuitry (3) within the defined temperature range.

7. A power system (2) comprising a fuel cell system (5), an electric energy storage system (30), and the computer system (1) of any one of the preceding claims, the fuel cell system (5) comprising a power conversion and distribution circuitry (3) configured to convert and deliver electric power generated by the fuel cell system (5) to the electric energy storage system (30) and to a power consumer (40).

8. The power system of claim 7, further comprising a temperature sensor (11) arranged to measure the temperature of at least one electrical connector (12) within the power conversion and distribution circuitry (3), such as of a busbar.

9. A vehicle (100) comprising the power system (2) of any one of claims 7-8.

10. A computer-implemented method for controlling a fuel cell system (5) operable to provide output power to a power consumer (40), the fuel cell system (5) comprising a power conversion and distribution circuitry (3) configured to convert and deliver electric power generated by the fuel cell system (5) to an electric energy storage system (30) and to the power consumer (40), the method comprising:
- monitoring (301), by processing circuitry (602) of a computer system (1, 600), an operating voltage of the fuel cell system (5) and/or of the electric energy storage system (30),
- monitoring (302), by the processing circuitry (602), a temperature of the power conversion and distribution circuitry (3),
- in response to detecting (303), by the processing circuitry, that the monitored operating voltage is below a nominal operating voltage of the fuel cell system (5), and that the monitored temperature is within a defined temperature range above a nominal temperature of the power conversion and distribution circuitry (3), temporarily controlling (304), by the processing circuitry, the fuel cell system (5) in a first operating mode, enabling power delivery in accordance with a power request from the power consumer (40).

11. The method of claim 10, further comprising:
- in response to detecting (305), by the processing circuitry, that the operating voltage is below the nominal operating voltage of the fuel cell system (5), and that the monitored temperature exceeds the defined temperature range, controlling (306), by the processing circuitry, the fuel cell system (5) in a second operating mode, electrically derating the fuel cell system (5).

12. The method of claim 10 or 11, further comprising:
- predicting (311), by the processing circuitry, a duration of the temporary control of the fuel cell system (5) in the first operating mode.

13. The method of any one of claims 10-12, further comprising:
- predicting (312), by the processing circuitry, a state-of-health of at least one electrical connector (12) of the power conversion and distribution circuitry (3) based on the monitored temperature.

14. A computer program product comprising program code for performing, when executed by the processing circuitry, the method of any of claims 10-13.

15. A non-transitory computer-readable storage medium comprising instructions, which when executed by the processing circuitry, cause the processing circuitry to perform the method of any of claims 10-13.
